# EUROPEAN PATENT SPECIFICATION

(11) **EP 2 459 006 B1**
(45) Date of publication and mention of the grant of the patent: **21.02.2018**
(21) Application number: 10804827.3
(22) Date of filing: 29.07.2010
(51) Int. Cl.: A23K 10/20, A23K 50/48

(54) **WET FOOD COMPOSITIONS HAVING THE CHARACTERISTICS OF DRY FOOD COMPOSITIONS**
NASSNAHRUNGSZUSAMMENSETZUNGEN MIT DEN EIGENSCHAFTEN VON TROCKENNAHRUNGSZUSAMMENSETZUNGEN
COMPOSITIONS ALIMENTAIRES HUMIDES PRÉSENTANT LES CARACTÉRISTIQUES DES COMPOSITIONS ALIMENTAIRES SÈCHES

(30) Priority: 30.07.2009 US 273074 P
(43) Date of publication of application: 06.06.2012
(73) Proprietor: Nestec S.A., 1800 Vevey (CH)
(72) Inventor: DIXON, Dan, K., St. Louis MO 63129 (US)
(74) Representative: Rupp, Christian
(86) International application number: PCT/US2010/002131
(87) International publication number: WO 2011/014256

(56) References cited:
- GB-A- 1 474 629
- GB-A- 2 149 639
- US-A- 4 895 731
- US-A1- 2003 207 006
- US-A1- 2004 037 943
- US-A1- 2005 031 673
- US-A1- 2006 147 583
- DATABASE GNPD [Online] MINTEL; November 2005 (2005-11), anonymus: "Welcome Kit Dog Food", XP002728003, Database accession no. 410628

## Description

### CROSS REFERENCE TO RELATED APPLICATIONS

### BACKGROUND OF THE INVENTION

### Field of the Invention

The invention relates generally to food compositions and particularly to wet food compositions having the characteristics of dry food compositions and methods for making such wet food compositions.

### Description of Related Art

Commercial food compositions may be classified into three main types based upon moisture and texture.

"Dry" food compositions contain less than about 12% moisture. They are typically hard, inelastic, and/or crumbly. Also, they are dry to the touch and stable under ambient conditions without the use of preservatives.

"Intermediate moisture" food compositions contain from about 12 to about 45% moisture. They are softer than dry food compositions and are dry to the touch unless specially formulated to be moist to the touch. Generally, preservatives must be added to make them stable under ambient conditions. Intermediate moisture food compositions can be further classified as "soft-expanded" or "soft-moist." Soft-expanded food compositions are also referred to as semi-moist. Soft-expanded food compositions contain from about 12 to 25% moisture. They are dry to the touch and soft and elastic. Soft-moist food compositions contain from about 25 to about 45% moisture. They are non-sticky to the touch, very soft, viscous, and pliable.

"Wet" food compositions contain greater than about 45% moisture, typically from about 65 to about 82%. They are usually soft and runny, particularly if they contain gravy. They are moist to the touch. They are often messy to process and handle. Generally, they do not contain preservatives and are hermetically sealed and stabilized by heating, e.g., retorting. They tend to degrade and spoil within hours if exposed to ambient conditions, *e.g.,* a container of wet food composition open to the atmosphere at room temperature. In some situations, preservatives are added to enhance stability.

The above ranges are generally applicable to most food compositions, particularly pet food compositions. However, the ranges can vary and overlap depending upon the particular food composition. For example, some food compositions may be considered "dry" when the moisture content is 15% or less. Skilled artisans are able to identify the type of food based upon the composition and the conditions.

The advantages and disadvantages of each food type are known to and debated by skilled artisans. Areas of consensus are that dry and intermediate moisture food compositions are easier to process and handle compared to wet food compositions. For example, after a wet food container is opened, excess and unused food must be covered and/or refrigerated to prevent spoilage, *e.g.,* the food loses moisture and becomes dry and less palatable. However, despite this inconvenience, wet food compositions generally have a higher palatability than dry or intermediate moisture food compositions (*See,* 2008 Pet Food Choice, www.pet-food-choice.co.uk/wet_or_drypet_food.htm).

Palatability is a major factor that affects consumer food choices, particularly pet owners. As a result, there has been an ongoing effort to produce a food having the convenience characteristics of "dry" or "soft-expanded" food compositions and the advantages of wet food compositions, *e.g.,* the convenient handling and other characteristics of dry food compositions and the relatively high palatability and other advantages of wet food compositions. Such attempts are known in the art. US5004624 describes preparation of farinaceous pieces that are coated with liquid gravy in a ratio of 1:1.2. The mixture is then allowed to equilibrate to give a semi-moist product with free or visible liquid. Stability is due to preservatives. The product still contains free liquid and will, therefore, still be messy to handle. US3852483 describes a preservative system for semi-moist products. The products showed superior palatability when compared to existing semi-moist formulations. The key ingredient was propylene glycol. No test was done versus canned food; such test cannot be conducted now because propylene glycol is no longer permitted in cat food and limited in dog food. US6767573 describes a food product whereby thermally gelled food matrix pieces were fried, sealed in a container, and retorted for microbial stability. This type of product will also have free liquids but much less than typical wet product. US6436463 and US6440485 describe a hybrid of the two main wet product forms: "loaf' and "chunks and gravy." The product takes the shape of its container after retorting but has visible particulates without the free runny gravy. This improves the appearance but not the soft, messy handling. US 2006/0147583 A1 discloses a lumpy product or chunk, which is suitable for admixing or as a sole constituent of animal food composition and which contains proteins, one or more water-binding components, water and salt.

Attempts to produce food compositions having the convenience of dry food compositions and the advantages of wet food compositions have met with limited success. There is, therefore, a need for novel food compositions that have the advantages of wet food compositions and the advantages of dry food compositions, *i.e.,* wet food compositions that have the characteristics of dry food compositions.

### SUMMARY OF THE INVENTION

It is, therefore, an object of the present invention to provide wet food compositions that have the characteristics of dry food compositions.

It is another object of the invention to provide blended food compositions that contain wet food compositions that have the characteristics of dry food compositions and one or more other comestible ingredients or compositions.

It is a further object of the present invention to provide methods for making wet food compositions that have the characteristics of dry food compositions.

One or more of these or other objects are achieved using wet food compositions that have the characteristics of dry food compositions, according to claim 1. Such wet food compositions comprise from about 90 to about 99% of one or more meat emulsion chunks, formed from one or more meats that have been emulsified and sized and formed into meat emulsion chunks, wherein the meats include meat from avian, bovine, ovine, piscine, or porcine animals, or combinations thereof; and from about 1 to about 10% of one or more binders, wherein the binders are selected from (i) the group consisting of starches; maltodextrins; undenatured, water-soluble animal proteins; undenatured, water-soluble plant proteins; hydrocolloid gums; or combinations thereof; or (ii) the group consisting of sodium alginate, carrageenan, pectin, guar, carob, locust bean gum, egg white, collagen, gelatin, milk proteins, plasma, and combinations thereof; wherein the compositions have a moisture content greater than 45%, and wherein the compositions have the characteristics of dry food compositions, having one or more of the following characteristics: (1) the wet food compositions are relatively dry to the touch when compared to typical wet food compositions; (2) the wet food compositions are relatively hard, inelastic, and crumbly when compared to typical wet food compositions; and (3) the wet food compositions are generally stable at ambient conditions without preservatives. The wet food compositions are made by a method according to claim 10, comprising: forming a meat emulsion; processing the meat emulsion to produce meat emulsion chunks; comminuting the meat emulsion chunks to produce chunks having a size of less than about 100 mm in two dimensions; mixing the comminuted chunks with from about 1 to about 10% of one or more binders; and pressing and shaping the mixture of comminuted chunks and binders to produce wet food compositions having a moisture content greater than 45% and having the characteristics of dry food compositions.

Other and further objects, features, and advantages of the present invention will be readily apparent to those skilled in the art.

### BRIEF DESCRIPTION OF THE DRAWINGS

FIG. 1 illustrates a wet food composition of the invention that has the characteristics of a dry food composition.
FIG. 2 illustrates a process flow diagram for one method used to make a wet food composition of the invention having the characteristics of a dry food composition.

### DETAILED DESCRIPTION OF THE INVENTION

### Definitions

The term "meat" means real meat from an animal, a meat analog, or combinations thereof.

The term "animal" means any animal that could benefit from or enjoy wet food compositions having the characteristics of dry food compositions, including human, avian, bovine, canine, equine, feline, hicrine, lupine, murine, ovine, or porcine animals.

The term "companion animal" means domesticated animals such as cats, dogs, rabbits, guinea pigs, ferrets, hamsters, mice, gerbils, horses, cows, goats, sheep, donkeys, pigs, and the like.

The term "single package" means that the components of a kit are physically associated in or with one or more containers and considered a unit for manufacture, distribution, sale, or use. Containers include, but are not limited to, bags, boxes, cartons, bottles, packages of any type or design or material, over-wrap, shrink-wrap, affixed components (*e.g.,* stapled, adhered, or the like), or combinations thereof. A single package may be containers of different individual wet food compositions or of individual wet food compositions and one or more other comestible ingredients or compositions physically associated such that they are considered a unit for manufacture, distribution, sale, or use.

The term "virtual package" means that the components of a kit are associated by directions on one or more physical or virtual kit components instructing the user how to obtain the other components, *e.g.*, in a bag or other container containing one component and directions instructing the user to go to a website, contact a recorded message or a fax-back service, view a visual message, or contact a caregiver or instructor to obtain instructions on how to use the kit or safety or technical information about one or more components of a kit.

All percentages expressed herein are by weight of the total weight of the composition unless expressed otherwise.

As used herein, ranges are used herein in shorthand, so as to avoid having to list and describe each and every value within the range. Any appropriate value within the range can be selected, where appropriate, as the upper value, lower value, or the terminus of the range.

As used herein, the singular form of a word includes the plural, and vice versa, unless the context clearly dictates otherwise. Thus, the references "a", "an", and "the" are generally inclusive of the plurals of the respective terms. For example, reference to "a method", or "a food composition" includes a plurality of such "methods", or "food compositions." Similarly, the words "comprise", "comprises", and "comprising" are to be interpreted inclusively rather than exclusively. Likewise the terms "include", "including" and "or" should all be construed to be inclusive, unless such a construction is clearly prohibited from the context. Similarly, the term "examples," particularly when followed by a listing of terms, is merely exemplary and illustrative and should not be deemed to be exclusive or comprehensive.

The methods and compositions and other advances disclosed here are not limited to particular methodology, protocols, and reagents described herein because, as the skilled artisan will appreciate, they may vary. Further, the terminology used herein is for the purpose of describing particular embodiments only, and is not intended to, and does not, limit the scope of that which is disclosed or claimed.

Unless defined otherwise, all technical and scientific terms, terms of art, and acronyms used herein have the meanings commonly understood by one of ordinary skill in the art in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The discussion of all patents, patent applications, publications, technical and/or scholarly articles, and other references is intended merely to summarize the assertions made therein. No admission is made that any such patents, patent applications, publications or references, or any portion thereof, are relevant, material, or prior art. The right to challenge the accuracy and pertinence of any assertion of such patents, patent applications, publications, and other references as relevant, material, or prior art is specifically reserved.

### The Invention

In one aspect, the invention provides wet food compositions that have the characteristics of dry food compositions. The compositions comprise from about 90 to about 99% of one or more meat emulsion chunks; and from about 1 to about 10% of one or more binders; wherein the compositions have a moisture content greater than 45%, and wherein the compositions have the characteristics of dry food compositions. The invention is based upon the discovery that a combination of one or more meats that have been emulsified and sized properly and formed into meat emulsion chunks can be mixed with appropriate binders and pressed and shaped to produce compositions that have greater than 45% moisture, but are surprisingly dry to the touch and relatively hard, inelastic, and crumbly when compared to typical wet food compositions. Generally, the compositions are also stable under ambient conditions without preservatives, *i.e.,* wet food compositions having the characteristics of dry food compositions.

The wet food compositions have a moisture content greater than 45%. In various embodiments, the compositions may have a moisture content of about 50%, 55%, 60%, 65%, 70%, 80%, 85%, or 90% moisture, preferably greater than 55% moisture, more preferably from about 60 to about 85% moisture, most preferably from about 65 to about 82% moisture.

The wet food compositions of the invention have the "characteristics of dry food compositions." Such wet food compositions have one or more of the following characteristics: (1) the wet food compositions are relatively dry to the touch when compared to typical wet food compositions; (2) the wet food compositions are relatively hard, inelastic, and crumbly when compared to typical wet food compositions; and (3) the wet food compositions are generally stable at ambient conditions without preservatives, although the compositions may contain preservatives in certain circumstances.

The meats useful in the invention are any meats and meat analogs suitable for making wet food compositions having the characteristics of dry food compositions. Such meats and meat analogs are known to skilled artisans. Such meats include real meat from avian, bovine, ovine, piscine, or porcine animals, or combinations thereof. In preferred embodiments, the meat is beef, pork, fish, turkey, chicken, or combinations thereof. In other embodiments, the meat can be a combination of real meat and meat analogs. A meat analog is produced using methods and compounds known to skilled artisans, e.g., vegetable protein meat analogs. Such meat analogs may contain a variety of minor ingredients to influence color, texture, and flavor created by heating the compositions during the production process. Examples of analog varieties include beef, chicken, pork, lamb, whitefish, salmon, soy, and wheat gluten analogs, or combinations thereof.

The meat emulsion chunks can be of any size useful to make food compositions intended for a particular consumer. Generally the chunks are less than about 100 mm in two dimensions. In certain embodiments, the meat emulsion chunks are less than about 90, 80, 75, 79, 60, 50, 40, 30, 25, 20, 15, 10, 8, 6, 4, 2, and 1 mm in two dimensions. In most embodiments, the meat emulsion chunks are less than about 25 mm. Most generally, the chunks are less than about 10 mm in two dimensions.

The binders useful in the invention include starches; maltodextrins; undenatured, water-soluble animal or plant proteins; hydrocolloid gums; or combinations thereof. Examples include sodium alginate, carrageenan, pectin, guar, carob, locust bean gum, egg white, collagen, gelatin, milk proteins, plasma, or combinations thereof. Preferred binders include plasma, wheat gluten, and guar gum. Such binders are hydrated by water from the chunks and/or water added to the compositions. The hydrated binders form a viscous composition that maintains the shape of the wet food composition after they are pressed into a particular shape. In embodiments where the wet food compositions are heated, the viscosity of the binders further increase due to one or more of, as applicable for the particular binder, (1) gelatinization of starches; (2) additional water uptake by starches; (3) denaturation of proteins (*e.g.* coagulation of egg or plasma protein); (4) crosslinking of proteins; or (5) increased water uptake by gums. In some situations for some binders, the binders may be pre-blended with any water that is to be added to the compositions.

The binders are mixed with the comminuted chunks in amounts of from about 1 to about 10%, preferably from about 1.5 to about 8.5%, most preferably from about 2 to about 7%.

In other embodiments, the wet food compositions further comprise one or more humectants. The humectants are added to the compositions to vary the amount of moisture in the compositions and water activity of the compositions. Any suitable humectant can be used; such humectants are known to skilled artisans. Suitable humectants include polyols. In preferred embodiments, the humectants are one or more of glycerol (glycerin), sorbitol, propylene glycol, butylene glycol, polydextrose, or combinations thereof. In various embodiments, the humectants are added to the compositions in amounts of from about 0.1 to about 10%, preferably from about 1 to about 8%, most preferably from about 2 to about 6%.

In certain embodiments, the wet food compositions further comprise one or more palatability enhancers. Many suitable palatability enhancers are known to skilled artisans. The palatability enhancers are added to the compositions to improve taste appeal. Such palatability enhancers include animal digests (*e.g.,* fish or poultry digests), natural flavors, artificial flavors, yeasts, yeast extracts, pyrophosphates, organic acids (*e.g.,* citric and fumaric acid), inorganic acids (*e.g.,* phosphoric acid and hydrochloric acid), or combinations thereof. The palatability enhancers are added to the compositions in amounts of from about 0.01 to about 6%.

In other embodiments, the wet food compositions further comprise one or more preservatives. Any preservative useful for increasing the stability of the compositions can be used. Many such preservatives are known to skilled artisans. Such preservatives include sorbic acid, potassium sorbate, calcium propionate, phosphoric acid, fumaric acid, sodium bisulfate, or combinations thereof. The preservatives are added to the compositions in amounts of from about 0.01 to about 3%.

In various embodiments, the wet food compositions further comprise one or more nutritional ingredients such as fruits, vegetables, herbs, antioxidants, essential fatty acids, amino acids, and the like. In some embodiments, the nutritional ingredients are glucosamine, carotenoids, L-camitine, or combinations thereof. These ingredients are added to the compositions to increase visual appeal and demonstrate the nutritional aspects of the composition. For example, peas, tomato chunks, spinach, carrots, or combinations thereof can be added to the compositions using techniques that make them visible in the composition. Such "visible nutrition" increases the appeal and illustrates the nutritional nature of the composition. Nutritional ingredients such as glucosamine, carotenoids, L-carnitine, are added to improve joint health, eye health, heart health, and the like. The nutritional ingredients are added to the compositions in amounts of from about 1 to about 20%. Generally, the amount of meat is decreased by an amount equal to the amount of nutritional ingredient added to the composition. Many such nutritional ingredients are known to skilled artisans.

The amount of moisture and the types and amount of binders can be varied within the given ranges to alter the texture, viscosity, and palatability of the compositions. In general, water can be added to the compositions to control the moisture content of the compositions. Similarly, when humectants, palatability enhancers, preservatives, nutritional ingredients, and other materials are added to the compositions, the moisture level can be adjusted by altering the amount of water added to or removed from the formulations or compositions. For example, if dried tomato chunks are used to produce the compositions, water may be added to adjust the moisture to the desired level.

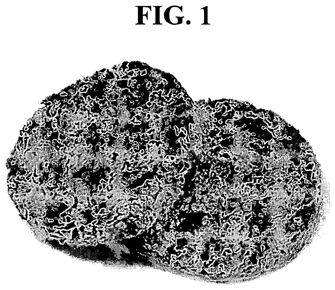

The wet food compositions can be formed into any desired shape and size. The compositions can be formed into a round patty or can be shaped to look like an animal or an object, *e.g.,* a duck, a star, a vegetable, a bone, or a car. The compositions can be oval, triangular, or multi-sided. The compositions can be any size but generally will weigh from about 5 to about 500 grams, preferably from about 10 to about 300, more preferably from about 20 to about 200 grams. In some embodiments, the composition is a patty about one inch in diameter and weighing about 30 grams (a 1-ounce patty), *e.g.,* the wet food composition shown in FIG. 1. The shaped compositions can be packaged together or can be packaged individually. When packaged individually, the shaped compositions can be used as packaged or can be packed further in multi-packs containing a plurality of the individually packaged compositions.

The wet food compositions are suitable for any animal that would benefit from or enjoy wet food compositions. Preferably, the compositions are for companion animals, e.g., canines or felines. Most preferably, the wet food compositions are pet food compositions, preferably for dogs or cats, most preferably cats.

Referring to FIG. 1, a wet food composition of the invention has the appearance of a dry food composition, *i.e.,* the composition looks like a hard, inelastic, and crumbly food. Further, upon handling, the composition has the feel of a dry food composition and, if consumed, has the texture and palatability of a wet food composition. In addition, the composition is stable at ambient conditions, *i.e.,* the characteristics change little if any when left exposed to the atmosphere. However, when consumed, the composition has the relatively high palatability characteristic of a wet food composition when compared to a dry food composition, likely due to the relatively high moisture content typical of wet food compositions.

In various embodiments, the wet food compositions of the present invention comprise additional ingredients such as vitamins, minerals, nucleic acids, fillers, flavors, stabilizers, emulsifiers, sweeteners, colorants, buffers, salts, coatings, condiments, prebiotics, probiotics, drugs, medicaments, medications, and the like known to skilled artisans. Non-limiting examples of supplementary minerals include calcium, phosphorous, potassium, sodium, iron, chloride, boron, copper, zinc, magnesium, manganese, iodine, selenium, and the like. Non-limiting examples of supplementary vitamins include vitamin A, any of the B vitamins, vitamin C, vitamin D, vitamin E, and vitamin K, including various salts, esters, or other derivatives of the foregoing. Additional dietary supplements may also be included, for example, any form of niacin, pantothenic acid, inulin, folic acid, biotin, amino acids, and the like, as well as salts and derivatives thereof. Selection of the ingredients and their amounts is known to skilled artisans. Specific amounts for each additional ingredient will depend on a variety of factors such as the ingredient included in the composition; the species of animal; the animal's age, body weight, general health, sex, and diet; the animal's consumption rate; the purpose for which the food compositions is being administered to the animal; and the like. Therefore, the component and ingredient amounts may vary widely and may deviate from the preferred proportions described herein.

In one embodiment, a wet food composition is formulated as a treat for a companion animal, *e.g.,* a canine such as a dog. Generally, treats are compositions that are given to an animal to entice the animal to eat during a non-meal time. Treats may be nutritional wherein the composition comprises one or more nutrients beneficial to the animal's health.

In another aspect, the invention provides blended food compositions comprising (1) wet food compositions of the present invention and (2) one or more other comestible ingredients or compositions. The comestible ingredients or compositions can be any comestible ingredient or composition compatible with the wet food compositions of the present invention. In one embodiment, the comestible composition is a dry food composition in the form of one or more dry kibbles suitable for consumption by companion animals, preferably dogs and cats. Preferably, the comestible ingredient or composition is selected from the group consisting of extruded kibbles, baked kibbles, extruded treats, and baked treats.

In preferred embodiments, the comestible ingredients or compositions have a moisture content of about 12% or less and/or a water activity (Aw) of about 0.65 or less. In other embodiments, the comestible ingredients or compositions have a moisture content of from about 12 to about 45%.

The blended food compositions of the invention comprise any suitable amount of the wet food compositions of the present invention. Generally, the wet food compositions comprise from about 1 to about 99% of the blended food composition, preferably from about 5 to about 99%, most preferably from about 5 to about 95%. In one embodiment, the wet food compositions comprise from about 25 to about 75% of the blended food composition. In another embodiment, the wet food compositions comprise from about 40 to about 60% of the blended food composition, preferably about 50%. Typically, the blended food compositions have enhanced palatability compared to food compositions comprising the comestible food ingredients or compositions alone.

In one embodiment, wet food compositions are mixed with or added to comestible ingredients or compositions just prior to use to produce blended food compositions. Typically, the wet food compositions of the invention are sold in a package designed to contain only such wet food compositions and to ensure their stability over time. Then, just before consumption, the wet food compositions are mixed with or applied to another comestible, e.g., dry pet food kibbles, to produce blended food compositions. In preferred embodiments, such compositions are sold in kits such as those described herein.

In another embodiment, wet food compositions are mixed with or added to comestible ingredients or compositions during manufacture of the blended composition. In this embodiment, the wet food compositions may need preservatives to maintain stability during storage before use.

In one embodiment, the blended food compositions are formulated to provide "complete and balanced" nutrition for an animal, preferably a companion animal, according to standards established by the Association of American Feed Control Officials (AAFCO). In another embodiment, the blended food composition is a pet food composition, e.g., dry kibbles and wet food compositions of the invention.

In another aspect, the invention provides methods for making wet food compositions having the characteristics of dry food compositions. The methods comprise forming a meat emulsion; processing the meat emulsion to produce meat emulsion chunks; comminuting the meat emulsion chunks to produce chunks having a size of less than about 100 mm in two dimensions; mixing the comminuted chunks with from about 1 to about 10% of one or more binders; and pressing and shaping the mixture of comminuted chunks and binders to produce wet food compositions having a moisture content greater than 45% and having the characteristics of dry food compositions.

Basically, the techniques used to produce wet food compositions having the characteristics of dry food compositions are routine and well known to skilled artisans. Methods for making meat emulsions, methods for making meat emulsion chunks, and methods for comminuting meat emulsion chunks to produce chunks of various sizes are known. Binders and comminuted chunks are mixed using any suitable method, e.g., stirring in a container or in a dough mixer. The mixture is pressed using any suitable means, e.g., presses and machines such as those marketed under the name NuTech® or Formax®, machines known to and used frequently by skilled artisans. The invention lies in using these techniques to combine meat emulsion chunks and binders to produce compositions that have a relatively high amount of moisture but have the characteristics of compositions that have a relatively low amount of moisture, *i.e.,* compositions that have the palatability of wet food compositions but the texture, look, feel, and other characteristics of dry food compositions.

In one embodiment, the wet food compositions are further processed to ensure stability, particularly shelf stability. Stability is accomplished by adding preservatives and reducing the pH before pressing and shaping the mixture. Any suitable preservative can be used. Suitable preservatives include sorbic acid, potassium sorbate, calcium propionate, phosphoric acid, fumaric acid, and sodium bisulfate. The pH is adjusted using any suitable method and compound, generally by adding an inorganic or organic acid, e.g., phosphoric, sulfuric, or hydrochloric acid. The pH should be less than about 5, preferably between about 3 and about 5, most preferably between about 4.2 and about 4.8.

In another embodiment, the wet food compositions are further processed to ensure stability, particularly shelf stability, more particularly shelf stability without preservatives. The compositions are sealed in a container and retorted using means known to skilled artisans. Generally, the containers are heated to at least 121°C for at least 3 minutes.

In one embodiment, the pressed and formed compositions are fried to improve the appearance of the surface of the compositions. Generally, the compositions are fried to alter the surface texture and color for visual and sensory enhancement. In a preferred embodiment, the compositions are deep fat fried to develop a light golden brown surface while keeping the interior a lighter color to improve the appearance, texture, taste, and mouthfeel of the composition.

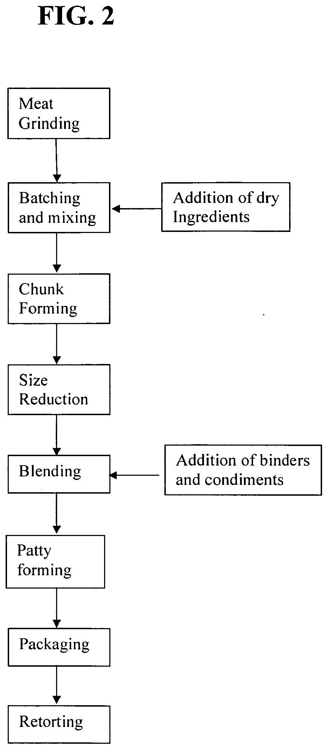

Referring to FIG. 2, meats are ground and then emulsified to a fine consistency. Dry minor ingredients are then added to the meats and mixed in a dough mixer to ensure complete mixing. Then, other functional ingredients are added and mixed to complete the dough for further processing. The mix is then formed into chunks by emulsifying the dough, *e.g.,* cooking by frictional heat and/or steam. The mix is then cooled by pumping it through a heat exchanger. This creates chunks with a meat-like texture. The chunks are then cut and size reduced into a desired size. Binders are then added to the chunks and blended. This blend is placed into a former device that forms the blend into a desired shape, *e.g.,* a patty. The device deposits the shaped blend into packages. The packages are sealed for further processing that sterilizes the blend, *e.g.,* retorting, irradiation, aseptic processing, high pressure treatment, and the like.

In another aspect, the invention provides wet food compositions having the characteristics of dry food compositions made using the methods of the invention.

In another aspect, the present disclosure provides packages comprising a material suitable for containing wet food compositions having the characteristics of dry food compositions and a label affixed to the package containing a word or words, picture, design, acronym, slogan, phrase, or other device, or combination thereof, that indicates that the contents of the package contains the wet food compositions. In various embodiments, the package further comprises a word or words, picture, design, acronym, slogan, phrase, or other device, or combination thereof, that indicates that the wet food compositions have one or more characteristics of dry food compositions. Any package or packaging material suitable for containing the wet food compositions having the characteristics of dry food compositions is useful in the invention, *e.g.,* a bag, box, bottle, can, pouch, and the like manufactured from paper, plastic, foil, metal, and the like.

In a another aspect, the invention provides kits suitable for preparing blended food compositions containing the wet food compositions of the invention and one or more comestible ingredients or compositions. The kits comprise in separate containers in a single package or in separate containers in a virtual package, as appropriate for the kit component, wet food compositions of the present invention and one or more of (1) one or more comestible ingredients or compositions; (2) instructions for how to combine the wet food compositions and comestible ingredients or compositions to produce blended food compositions; (3) one or more nutritional supplements; (4) one or more health promoting agents; and (5) one or more devices useful for preparing a blended food composition, e.g., food containers such as bowls or stirring devices such as spatulas and spoons.

When the kit comprises a virtual package, the kit is limited to instructions in a virtual environment in combination with one or more physical kit components. The kit contains the wet food compositions, comestible ingredients or compositions, and other components in amounts sufficient to produce a blended food composition. Typically, the wet food compositions and the other suitable kit components (*e.g.,* dry or intermediate moisture food compositions) are admixed just prior to consumption by an animal. The kits may contain the kit components in any of various combinations and/or mixtures. In one embodiment, the kit contains a packet containing one or more wet food compositions and a container of food (*e.g.,* kibbles for companion animals) for consumption by an animal. The kit may contain additional items such as a device for mixing the compositions and ingredients or a device for containing the admixture, *e.g.,* a food bowl.

Any agent that promotes the health of an animal can be included in the kit. In one embodiment, the agent is selected from the group consisting of probiotics, prebiotics, or combinations thereof. In another, the agent is selected from the group consisting of vitamins, minerals, nutritional supplements, fish oil, drugs, glucosamine, chondroitin, of combinations thereof.

In a further aspect, the present disclosure provides a means for communicating information about or instructions for one or more of (1) handling the wet food compositions having the characteristics of dry food compositions; (2) administering the wet food compositions to an animal; (3) methods and techniques for preparing blended food compositions using the wet food compositions and various comestible ingredients or compositions; and (4) the advantages of the wet food compositions compared to typical wet or dry food compositions. The means comprises a document, digital storage media, optical storage media, audio presentation, or visual display containing the information or instructions. In certain embodiments, the communication means is a displayed web site, visual display, kiosk, brochure, product label, package insert, advertisement, handout, public announcement, audiotape, videotape, DVD, CD-ROM, computer readable chip, computer readable card, computer readable disk, computer memory, or combination thereof containing such information or instructions. Useful information includes one or more of contact information for animals or their caregivers to use if they have a question about the invention and its use. Useful instructions include administration amounts and frequency, *e.g.,* feeding amounts and schedule. The communication means is useful for instructing on the benefits of using the present invention and communicating the approved methods for administering the invention to an animal.

### EXAMPLES

The invention can be further illustrated by the following examples, although it will be understood that these examples are included merely for purposes of illustration and are not intended to limit the scope of the invention unless otherwise specifically indicated. The following examples are given to illustrate the invention.

### Example 1

Comminuted chicken chunks useful for producing a comminuted chicken emulsion product were produced using the formula shown in Table 1. To make 453.6 kg (1000 lbs) of chicken chunks, 116 kg (255.94 lbs) of frozen pork meat mix/liver, 148 (325.84 lbs) frozen chicken breast frames, and 29 kg (63.84 lbs) of ground turkey were sized reduced with an extructor/grinder with plate openings 6.35 mm diameter. The ground meat blend was then pumped through a continuous emulsifier where the temperature was brought up to 35°C due to mechanical heating. This emulsified meat was then pumped into a paddle dough mixer. At the same time the remaining ingredients (Table 1) were added, water first, followed by the vitamins, minerals, taurine, titanium dioxide, and the wheat gluten and soy protein isolate last. These ingredients were mixed by the paddle mixer for 5 minutes until a homogenous dough was formed. The moisture of the dough was determined with a microwave heating analyzer. It was 51% and within target range. The dough was then pumped to a continuous emulsifier. In addition to being emulsified, the pressure on and the temperature of the mass was increased. The temperature fluctuated in a range of from 150 to 160°C and the pressure of from 0.586 to 0.689 MPa (85 to 100 psi). The pressurized emulsion was then fed into a heat exchanger with jacketed cooling water (21 to 32°C) that flowed in a counter current direction. The set chicken emulsion product exited the heat exchanger through knife grids in strips that were then comminuted with a Commitrol Dicer to obtain particles having a particle size distribution ranging from 1 to 3.5 mm.

**Table 1**

| Ingredient | lbs |
|---|---|
| Pork Meat Mix / Liver, Frozen | 255.94 |
| Ground Turkey, Frozen | 63.84 |
| Chicken Breast Frames, Frozen | 325.84 |
| Vitamin Premix | 3.5 |
| Mineral Premix | 24.84 |
| Flavor Blend | 10.46 |
| Taurine | 2.33 |
| Titanium Dioxide | 10.21 |
| Water | 32.76 |
| Wheat Gluten | 214.20 |
| Soy Protein Isolate | 56.08 |
| Total | 1000 |

### Example 2

A comminuted chicken emulsion product was produced using the formula shown in Table 2. To make 45.35 kg (100 lbs) of product, the binders 0.362 kg (0.8 lbs) plasma, 0.544 kg (1.2 lbs) wheat gluten, and 0.226 kg (0.5 lbs) guar gum) were mixed with the water (7 kg (15.6 lbs)) to hydrate them and improve mixing with the other ingredients. The comminuted chicken chunks were added into a batch mixer followed by the binder solution and condiments (dehydrated peas, carrots, tomato, and spinach flakes). This mix was fed into a forming machine (NuTEC former) to make round patties (FIG. 1) weighing from about 25 to about 30 grams each. Moisture of the product was 57%. The products were sealed individually in containers and sterilized by retorting.

**Table 2**

| Ingredient | lbs |
|---|---|
| Comminuted Chicken Chunks | 74.8 |
| Plasma Powder | 0.8 |
| Wheat Gluten | 1.2 |
| Guar Gum | 0.5 |
| Water | 15.6 |
| Dried Peas | 2 |
| Dried Carrots | 2 |
| Dehydrated Tomato Chunks | 2 |
| Dehydrated Spinach Flakes | 1.1 |
| Total | 100 |

### Example 3

The procedure in Example 2 and the ingredients in Table 2 were used to make 45.35 kg (100 lbs) of a comminuted chicken emulsion product with a higher moisture level. The amount of water used was higher, *i.e.,* 14.33 kg (31.6 lbs) compared to 7 kg (15.6 lbs) in Example 2. Moisture of the product was 66%.

**Table 3**

| Ingredient | lbs |
|---|---|
| Comminuted Chicken Chunks | 60.6 |
| Plasma | 0.7 |
| Wheat Gluten | 1 |
| Guar Gum | 0.4 |
| Water | 31.6 |
| Dried Peas | 1.6 |
| Dried Carrots | 1.6 |
| Dehydrated Tomato Chunks | 1.6 |
| Dehydrated Spinach Flakes | 0.9 |
| Total | 100 |

In the specification, there have been disclosed typical preferred embodiments of the invention. Although specific terms are employed, they are used in a generic and descriptive sense only and not for purposes of limitation. The scope of the invention is set forth in the claims. Obviously many modifications and variations of the invention are possible in light of the above teachings. It is therefore to be understood that within the scope of the appended claims, the invention may be practiced otherwise than as specifically described.

## Claims

1. A wet food composition comprising:
from 90 to 99% of one or more meat emulsion chunks; and
from 1 to 10% of one or more binders;
wherein the meat emulsion chunks are formed from one or more meats that have been emulsified and sized and formed into meat emulsion chunks, wherein the meats include meat from avian, bovine, ovine, piscine, or porcine animals, or combinations thereof;
wherein the binders are selected from (i) the group consisting of starches; maltodextrins;
undenatured, water-soluble animal proteins; undenatured, water-soluble plant proteins;
hydrocolloid gums; or combinations thereof; or (ii) the group consisting of sodium alginate, carrageenan, pectin, guar, carob, locust bean gum, egg white, collagen, gelatin, milk proteins, plasma, and combinations thereof;
wherein the composition has a moisture content greater than 45%, and
wherein the composition has the characteristics of a dry food composition having one or more of the following characteristics: (1) the wet food composition is relatively dry to the touch when compared to typical wet food compositions; (2) the wet food composition is relatively hard, inelastic, and crumbly when compared to typical wet food compositions; and (3) the wet food composition is generally stable at ambient conditions without preservatives.

2. The composition of claim 1 wherein the composition has (i) a moisture content greater than 55%; or (ii) a moisture content greater than 65%; or (iii) a moisture content of from 65 to 85%.

3. The composition of claim 1 wherein the composition further comprises one or more humectants; optionally wherein the humectants are (i) polyols or (ii) glycerol (glycerin), sorbitol; propylene glycol, butylene glycol, polydextrose, and combinations thereof; or (iii) added to the composition in amounts of from 0.1 to 10%.

4. The composition of claim 1 wherein the composition further comprises one or more palatability enhancers; optionally wherein (a) the palatability enhancers are animal digests, fish digests, natural flavors, artificial flavors, yeasts, yeast extracts, pyrophosphates, organic acids, inorganic acids, and combinations thereof; or (b) humectants are added to the composition in amounts of from 0.01 to 6%.

5. The composition of claim 1 wherein the composition further comprises one or more preservatives; optionally wherein the preservatives are (i) sorbic acid, potassium sorbate, calcium propionate, phosphoric acid, fumaric acid, sodium bisulfate, and combinations thereof; or (ii) added to the composition in amounts of from 0.01 to 3%.

6. The composition of claim 1 wherein the composition further comprises one or more nutritional ingredients; optionally wherein nutritional ingredients are added to the composition in amounts of from 1 to 20%.

7. The composition of claim 1 wherein the composition is a pet food composition.

8. A blended food composition comprising (1) the composition of claim 1; and (2) one or more other comestible ingredients or compositions.

9. The blended food composition of claim 8 wherein (a) the comestible ingredients or compositions (i) have a moisture content of 12% or less; or (ii) have an Aw of 0.65 or less; or (iii) have a moisture content of from 12 to 45%; or (iv) are selected from the group consisting of extruded kibbles, baked kibbles, extruded treats, and baked treats; or (b) the wet food composition contains preservatives.

10. A method for making a wet food composition having the characteristics of a dry food composition comprising forming a meat emulsion; processing the meat emulsion to produce meat emulsion chunks; comminuting the meat emulsion chunks to produce chunks having a size of less than 100 mm in two dimensions; mixing the comminuted chunks with from 1 to 10% of one or more binders; and
pressing and shaping the mixture of comminuted chunks and binders to produce a wet food composition having a moisture content greater than 45% and having the characteristics of a dry food composition having one or more of the following characteristics: (1) the wet food composition is relatively dry to the touch when compared to typical wet food compositions; (2) the wet food composition is relatively hard, inelastic, and crumbly when compared to typical wet food compositions; and (3) the wet food composition is generally stable at ambient conditions without preservatives, wherein the meat emulsion includes meat from avian, bovine, ovine, piscine, or porcine animals, or combinations thereof;
and wherein the binders are selected from (i) the group consisting of starches; maltodextrins; undenatured, water-soluble animal proteins; undenatured, water-soluble plant proteins; hydrocolloid gums; or combinations thereof; or (ii) the group consisting of sodium alginate, carrageenan, pectin, guar, carob, locust bean gum, egg white, collagen, gelatin, milk proteins, plasma, and combinations thereof.

11. A kit suitable for preparing a blended food composition comprising in separate containers in a single package or in separate containers in a virtual package, as appropriate for the kit component, a wet food composition according to any one of claims 1 to 7;
and one or more of (1) one or more comestible ingredients or compositions; (2) instructions for how to combine the wet food composition and comestible ingredients or compositions to produce a blended food composition; (3) one or more nutritional supplements; (4) one or more health promoting agents; and (5) one or more devices useful for preparing a blended food composition; optionally wherein the health promoting agents are probiotics, prebiotics, and combinations thereof.

## Patentansprüche

1. Nasse Nahrungsmittelzusammensetzung, umfassend:
von 90 bis 99 % ein oder mehrere Fleischemulsionsstücke; und
von 1 bis 10 % ein oder mehrere Bindemittel;
wobei die Fleischemulsionsstücke aus einer oder mehreren Fleischsorten gebildet sind, die emulgiert und in der Größe angepasst und zu Fleischemulsionsstücken gebildet wurden, wobei die Fleischsorten Fleisch von Geflügel, Rind, Schaf, Fisch oder Schwein oder Kombinationen davon einschließen;
wobei die Bindemittel ausgewählt sind aus (i) der Gruppe bestehend aus Stärken; Maltodextrinen; undenaturierten, wasserlöslichen tierischen Proteinen; undenaturierten, wasserlöslichen pflanzlichen Proteinen; Hydrokolloidgummistoffen; oder Kombinationen davon; oder (ii) der Gruppe bestehend aus Natriumalginat, Carrageen, Pektin, Guargummi, Johannisbrot, Johannisbrotkernmehl, Eiweiß, Collagen, Gelatine, Milchproteinen, Plasma und Kombinationen davon;
wobei die Zusammensetzung einen Feuchtigkeitsgehalt von mehr als 45 % aufweist, und
wobei die Zusammensetzung die Eigenschaften einer trockenen Nahrungsmittelzusammensetzung aufweist, die eine oder mehrere der folgenden Eigenschaften aufweist: (1) die nasse Nahrungsmittelzusammensetzung fühlt sich im Vergleich zu typischen nassen Nahrungsmittelzusammensetzungen relativ trocken an; (2) die nasse Nahrungsmittelzusammensetzung ist im Vergleich zu typischen nassen Nahrungsmittelzusammensetzungen relativ hart, unelastisch und krümelig; und (3) die nasse Nahrungsmittelzusammensetzung ist unter Umgebungsbedingungen ohne Konservierungsstoffe im Allgemeinen stabil.

2. Zusammensetzung nach Anspruch 1, wobei die Zusammensetzung (i) einen Feuchtigkeitsgehalt von mehr als 55 %; oder (ii) einen Feuchtigkeitsgehalt von mehr als 65 %; oder (iii) einen Feuchtigkeitsgehalt von 65 bis 85 % aufweist.

3. Zusammensetzung nach Anspruch 1, wobei die Zusammensetzung ferner ein oder mehrere Feuchthaltemittel umfasst; wobei die Feuchthaltemittel wahlweise (i) Polyole oder (ii) Glycerol (Glycerin), Sorbit; Propylenglycol, Butylenglycol, Polydextrose und Kombinationen davon sind; oder (iii) zu der Zusammensetzung in Mengen von 0,1 bis 10 % zugegeben werden.

4. Zusammensetzung nach Anspruch 1, wobei die Zusammensetzung ferner einen oder mehrere Geschmacksverstärker umfasst; wobei wahlweise (a) die Geschmacksverstärker tierische Aufschlussprodukte, Fischaufschlussprodukte, natürliche Geschmacksstoffe, künstliche Geschmacksstoffe, Hefen, Hefeextrakte, Pyrophosphate, organische Säuren, anorganische Säuren und Kombinationen davon sind; oder (b) Feuchthaltemittel zu der Zusammensetzung in Mengen von 0,01 bis 6 % zugegeben werden.

5. Zusammensetzung nach Anspruch 1, wobei die Zusammensetzung ferner einen oder mehrere Konservierungsstoffe umfasst; wobei wahlweise die Konservierungsstoffe (i) Sorbinsäure, Kaliumsorbat, Calciumpropionat, Phosphorsäure, Fumarsäure, Natriumbisulfat und Kombinationen davon sind; oder (ii) zu der Zusammensetzung in Mengen von 0,01 bis 3 % zugegeben werden.

6. Zusammensetzung nach Anspruch 1, wobei die Zusammensetzung ferner einen oder mehrere Nahrungsmittelinhaltsstoffe umfasst; wobei wahlweise Nahrungsmittelinhaltsstoffe zu der Zusammensetzung in Mengen von 1 bis 20 % zugegeben werden.

7. Zusammensetzung nach Anspruch 1, wobei die Zusammensetzung eine Haustierfutterzusammensetzung ist.

8. Gemischte Nahrungsmittelzusammensetzung, umfassend (1) die Zusammensetzung nach Anspruch 1; und (2) einen oder mehrere andere genießbare Inhaltsstoffe oder Zusammensetzungen.

9. Gemischte Nahrungsmittelzusammensetzung nach Anspruch 8, wobei (a) die genießbaren Inhaltsstoffe oder Zusammensetzungen (i) einen Feuchtigkeitsgehalt von 12 % oder weniger aufweisen; oder (ii) einen Aw-Wert von 0,65 oder weniger aufweisen; oder (iii) einen Feuchtigkeitsgehalt von 12 bis 45 % aufweisen; oder
(iv) ausgewählt sind aus der Gruppe bestehend aus extrudiertem Trockenfutter, gebackenem Trockenfutter, extrudierten Leckerchen und gebackenen Leckerchen, oder (b) die nasse Nahrungsmittelzusammensetzung Konservierungsstoffe enthält.

10. Verfahren zum Herstellen einer nassen Nahrungsmittelzusammensetzung, die die Eigenschaften einer trockenen Nahrungsmittelzusammensetzung aufweist, umfassend das Bilden einer Fleischemulsion; Verarbeiten der Fleischemulsion, um Fleischemulsionsstücke herzustellen; Zerkleinern der Fleischemulsionsstücke, um Stücke mit einer Größe von weniger als 100 mm in zwei Abmessungen herzustellen; Mischen der zerkleinerten Stücke mit 1 bis 10 % eines oder mehrerer Bindemittel; und
Pressen und Formen der Mischung zerkleinerter Stücke und Bindemittel, um eine nasse Nahrungsmittelzusammensetzung mit einem Feuchtigkeitsgehalt von mehr als 45 % und mit den Eigenschaften einer trockenen Nahrungsmittelzusammensetzung zu erzeugen, die eine oder mehrere der folgenden Eigenschaften aufweist: (1) die nasse Nahrungsmittelzusammensetzung fühlt sich im Vergleich zu typischen nassen Nahrungsmittelzusammensetzungen relativ trocken an; (2) die nasse Nahrungsmittelzusammensetzung ist im Vergleich zu typischen nassen Nahrungsmittelzusammensetzungen relativ hart, unelastisch und krümelig; und (3) die nasse Nahrungsmittelzusammensetzung ist unter Umgebungsbedingungen ohne Konservierungsstoffe im Allgemeinen stabil,
wobei die Fleischemulsion Fleisch von Geflügel, Rind, Schaf, Fisch oder Schwein oder Kombinationen davon einschließt;
und wobei die Bindemittel ausgewählt sind aus (i) der Gruppe bestehend aus Stärken; Maltodextrinen; undenaturierten, wasserlöslichen tierischen Proteinen; undenaturierten, wasserlöslichen pflanzlichen Proteinen; Hydrokolloidgummistoffen; oder Kombinationen davon; oder (ii) der Gruppe bestehend aus Natriumalginat, Carrageen, Pektin, Guargummi, Johannisbrot, Johannisbrotkernmehl, Eiweiß, Collagen, Gelatine, Milchproteinen, Plasma und Kombinationen davon.

11. Set, geeignet zur Herstellung einer gemischten Nahrungsmittelzusammensetzung, umfassend in separaten Behältern in einer Einzelpackung oder in separaten Behältern in einer virtuellen Packung, wie für den Setbestandteil angemessen, eine nasse Nahrungsmittelzusammensetzung nach einem der Ansprüche 1 bis 7;
und ein oder mehrere (1) von einem oder mehreren genießbaren Inhaltsstoffen oder Zusammensetzungen; (2) Anweisungen, wie die nasse Nahrungsmittelzusammensetzung und genießbaren Inhaltsstoffe oder Zusammensetzungen zu kombinieren sind, um eine gemischte Nahrungsmittelzusammensetzung zu bilden; (3) ein oder mehrere Nahrungsergänzungsmittel; (4) ein oder mehrere gesundheitsfördernde Mittel; und (5) eine oder mehrere Vorrichtungen, die zum Herstellen einer gemischten Nahrungsmittelzusammensetzung geeignet sind; wobei die gesundheitsfördernden Mittel wahlweise Probiotika, Präbiotika und Kombinationen davon sind.

## Revendications

1. Composition alimentaire humide comprenant :
de 90 à 99 % d'un ou plusieurs morceaux d'émulsion de viande ; et
de 1 à 10 % d'un ou plusieurs liants ;
dans laquelle les morceaux d'émulsion de viande sont formés à partir d'une ou plusieurs viandes qui ont été émulsifiées et dimensionnées et formées en morceaux d'émulsion de viande, dans laquelle les viandes incluent de la viande d'oiseaux, de bovins, d'ovins, de poissons ou de porcins, ou des combinaisons de celles-ci ;
dans laquelle les liants sont choisis parmi (i) le groupe constitué d'amidons ; maltodextrines ; protéines animales hydrosolubles non dénaturées ; protéines végétales hydrosolubles non dénaturées ; gommes hydrocolloïdes ; ou des combinaisons de ceux-ci ; ou (ii) le groupe constitué d'alginate de sodium, carraghénane, pectine, gomme de guar, caroube, gomme de caroube, blanc d'oeuf, collagène, gélatine, protéines de lait, plasma, et des combinaisons de ceux-ci ;
où la composition a une teneur en humidité supérieure à 45 %, et
où la composition a les caractéristiques d'une composition alimentaire sèche ayant une ou plusieurs des caractéristiques suivantes : (1) la composition alimentaire humide est relativement sèche au toucher par comparaison avec des compositions alimentaires humides typiques ; (2) la composition alimentaire humide est relativement dure, non élastique et friable par comparaison avec des compositions alimentaires humides typiques ; et (3) la composition alimentaire humide est généralement stable dans des conditions ambiantes sans conservateurs.

2. Composition selon la revendication 1, où la composition a (i) une teneur en humidité supérieure à 55 % ; ou (ii) une teneur en humidité supérieure à 65 % ; ou (iii) une teneur en humidité allant de 65 à 85 %.

3. Composition selon la revendication 1, où la composition comprend en outre un ou plusieurs humectants ; éventuellement dans laquelle les humectants sont (i) des polyols ou (ii) du glycérol (glycérine), du sorbitol ; du propylène glycol, du butylène glycol, du polydextrose, et des combinaisons de ceux-ci ; ou (iii) ajoutés à la composition en des quantités allant de 0,1 à 10 %.

4. Composition selon la revendication 1, où la composition comprend en outre un ou plusieurs exhausteurs de goût ; éventuellement dans laquelle (a) les exhausteurs de goût sont des digestats animaux, des digestats de poisson, des arômes naturels, des arômes artificiels, des levures, des extraits de levure, des pyrophosphates, des acides organiques, des acides inorganiques, et des combinaisons de ceux-ci ; ou (b) des humectants sont ajoutés à la composition en des quantités allant de 0,01 à 6 %.

5. Composition selon la revendication 1, où la composition comprend en outre un ou plusieurs conservateurs ; éventuellement dans laquelle les conservateurs sont (i) l'acide sorbique, le sorbate de potassium, le propionate de calcium, l'acide phosphorique, l'acide fumarique, le bisulfate de sodium, et des combinaisons de ceux-ci ; ou (ii) ajoutés à la composition en des quantités allant de 0,01 à 3 %.

6. Composition selon la revendication 1, où la composition comprend en outre un ou plusieurs ingrédients nutritionnels ; éventuellement dans laquelle les ingrédients nutritionnels sont ajoutés à la composition en des quantités allant de 1 à 20 %.

7. Composition selon la revendication 1, où la composition est une composition alimentaire pour animaux de compagnie.

8. Composition alimentaire mélangée comprenant (1) la composition selon la revendication 1 ; et (2) un ou plusieurs autres ingrédients ou compositions comestibles.

9. Composition alimentaire mélangée selon la revendication 8, dans laquelle (a) les ingrédients ou compositions comestibles (i) ont une teneur en humidité de 12 % ou moins ; ou (ii) ont une activité de l'eau (Aw) de 0,65 ou moins ; ou (iii) ont une teneur en humidité allant de 12 à 45 % ; ou
(iv) sont choisis dans le groupe constitué de croquettes extrudées, croquettes cuites, friandises extrudées et friandises cuites ; ou (b) la composition alimentaire humide contient des conservateurs.

10. Procédé de fabrication d'une composition alimentaire humide ayant les caractéristiques d'une composition alimentaire sèche comprenant la formation d'une émulsion de viande ; le traitement de l'émulsion de viande pour produire des morceaux d'émulsion de viande ; le broyage des morceaux d'émulsion de viande pour produire des morceaux ayant une taille inférieure à 100 mm dans deux dimensions ; le mélange des morceaux broyés avec de 1 à 10 % d'un ou plusieurs liants ; et
le pressage et la mise en forme du mélange de morceaux broyés et de liants pour produire une composition alimentaire humide ayant une teneur en humidité supérieure à 45 % et ayant les caractéristiques d'une composition alimentaire sèche ayant une ou plusieurs parmi les caractéristiques suivantes : (1) la composition alimentaire humide est relativement sèche au toucher par comparaison avec des compositions alimentaires humides typiques ; (2) la composition alimentaire humide est relativement dure, non élastique et friable par comparaison avec des compositions alimentaires humides typiques ; et (3) la composition alimentaire humide est généralement stable dans des conditions ambiantes sans conservateurs,
dans lequel l'émulsion de viande inclut de la viande d'oiseaux, de bovins, d'ovins, de poissons ou de porcins, ou des combinaisons de ceux-ci ;
et dans lequel les liants sont choisis parmi (i) le groupe constitué d'amidons ; maltodextrines ; protéines animales hydrosolubles non dénaturées ; protéines végétales hydrosolubles non dénaturées ; gommes hydrocolloïdes ; ou des combinaisons de ceux-ci ; ou (ii) le groupe constitué d'alginate de sodium, carraghénane, pectine, gomme de guar, caroube, gomme de caroube, blanc d'oeuf, collagène, gélatine, protéines de lait, plasma, et des combinaisons de ceux-ci.

11. Trousse appropriée pour la préparation d'une composition alimentaire mélangée comprenant dans des récipients indépendants dans un conditionnement unique ou dans des récipients indépendants dans un conditionnement virtuel, comme il convient pour le composant de la trousse, une composition alimentaire humide selon l'une quelconque des revendications 1 à 7 ;
et un ou plusieurs parmi (1) un ou plusieurs ingrédients ou compositions comestibles ; (2) des instructions concernant la manière de combiner la composition alimentaire humide et les ingrédients ou compositions comestibles pour produire une composition alimentaire mélangée ; (3) un ou plusieurs compléments nutritionnels ; (4) un ou plusieurs agents bénéfiques pour la santé ; et (5) un ou plusieurs dispositifs utiles pour la préparation d'une composition alimentaire mélangée ; éventuellement dans laquelle les agents bénéfiques pour la santé sont des probiotiques, des prébiotiques et des combinaisons de ceux-ci.
